# EUROPEAN PATENT APPLICATION

(11) **EP 4 759 535 A1**
(43) Date of publication of application: **17.06.2026**
(21) Application number: 24218756.5
(22) Date of filing: 10.12.2024
(51) Int. Cl.: B32B 5/02, B32B 5/06, B32B 5/24, B32B 5/26, B32B 7/05, B32B 7/09, B32B 7/12, B32B 25/10, B32B 27/08, B32B 27/12, B32B 27/32, B32B 27/34, B32B 27/36

(54) **AUTOMOTIVE TRIM PART WITH A NEEDLEFELT CARPET CONSTRUCTION**

(71) Applicant: Autoneum Management AG, 8406 Winterthur (CH)
(72) Inventor: OVERKEMPING, Derk, 46499 Hamminkeln (DE); KOSSANYI, Mathias, 75010 Paris (FR); MAZROUEI SEBDANI, Zahra, 8406 Winterthur (CH); MEENAKSHISUNDARAM, Meganathan, 1110 Morges (CH)

(57) **Abstract**

Automotive trim part comprising a carpet layer consisting of a fibrous structured needlefelt top layer, and a backing layer comprising a fibrous needlefelt layer, whereby the fibrous needlefelt layer comprises fibers and a thermoplastic binder. The fibers from the needlefelt top layer extend into the backing layer and the extended fibers in the backing layer are locked in place by the thermoplastic binder of the backing layer.

## Description

### Technical Field

The invention is directed to moulded velour needlefelt carpet constructions for automotive usage and a method of producing such carpet constructions.

### Background

Structured needlefelt carpets, like velour or dilour, used in automotive trim part constructions, are produced in needling process to convert a loose fibrous structure into a densified and structured needlefelt carpet. They may consist of at least the steps of pre-needling the loose fibrous structure into a densified and loosely entangled web; first main needling to further densify the web, whereby the web is needled, preferably equally from both directions to obtain an even entangled web throughout the thickness of the layer; a structure needling step whereby the use of structure needles enables a surface pattern on top of the visible side of the layer, while at the same time the lower part of the layer is further densified. The effect should preferably result in a looped or fluffy top surface and a densified foot area. For this step fork needles may be used, needled from the back of the carpet in the direction of the visible surface, the length and pile formed is maintained by needling against a bristle brush to prevent them from going flat during needling. This creates loops in the top surface.

A thus formed needlefelt carpet layer may be used together with one or more backing layers and moulded in a required 3D shape to form an automotive trim part, like for instance a flooring part or a trunk side trim part. A structured needlefelt top layer as just described is combined with a backing layer using an adhesive layer, for instance in the form of a film layer, extruded layer, binder dispersion layer, binder powder or binding fibers. This has an effect on the perceived softness of the carpet surface as well as on the stiffness of the layer. Delamination of the layers is mainly resulting from a bad adhesion of the glue or binder to the surface, while strike through of glue elements may deteriorate the aesthetic appeal of the visible carpet surface. In addition, binder may wick into the carpet layer and reduce the overall pile feeling of the carpet.

Although it is known to needle different layers together, this is done already in an earlier stage of the process, pre-needled mats may be stacked and needled from both sides to obtain a final needle mat based on 2-layers of materials. In case for one layer another fiber blend is used as for the other layer, this will become visible. As fibers are carried over to the other layer upon needling. Hence such processes were not used for structured needlefelt carpets as this would introduce unwanted visual appearance of the materials used in the backing layer. Conventionally, an adhesive layer was still thought to be necessary between such needled felts to obtain the required abrasion performance of the carpet surface as required by the car makers on moulded parts. Furthermore, needling for construction, to obtain a basic mat is always done before needling the structural surface, like dilour or velour, as it was though that any needling after this step would ruin the thus formed surface.

It is the goal to provide for an alternative produced needlefelt surface, that suffice the abrasion performance of the automotive industry after moulding in a required shape, eventually including additional backing layers, without the disadvantageous from the prior art and to provide for a new type of needlefelt carpet with a softer pile and reduced faults during moulding.

### Summary of the invention

The object of the invention is achieved by an automotive trim part comprising a carpet layer consisting of a fibrous structured needlefelt top layer, and a backing layer comprising a fibrous needlefelt layer, whereby the fibrous needlefelt layer comprises fibers and a thermoplastic binder according to claim 1 and the use of such a trim part in a vehicle according to claim 13.

In particular, by the feature whereby the fibers from the structured needlefelt top layer extend into the backing layer, and these extended fibers are locked in place by the thermoplastic binder of the backing layer, it is possible to obtain binding between both layers without an adhesive or binder layer between these layers.

Surprisingly, the binder in the backing layer is enough to lock-in the fibers extending from the top layer into the backing layer, thereby binding both layers together, while maintaining a minimal slight movement between both layers. Surprisingly, this binding of the layers in combination with a quasi-loose binding without a true face to face adhesive binding is enough to obtain a strong carpet construction that can withstand peeling test and abrasion after thermal moulding into the final shape. Furthermore, the material was found to mould more precise into the shape of the automotive part. In particular, in high stretch areas around more difficult curved sections the carpet layer is following more precisely tool contours and induces less stretchmarks, folds or other faults in the final moulded trim part.

The top layer and the backing layer are in contact face-to-face without the need of substantial adhesive bonding by a separate adhesive layer as commonly used in state-of-the-art trim parts, reducing the need for additional process steps as well as adding other materials, like latex, hot melt glues, or LDPE powder, which have a negative impact on possible recycling routes of the final trim part at end of life as well as of production waste.

Furthermore, surprisingly the needling going through the structured needlefelt top layer to the back to extend the fibers of the top layer into the backing layer is not visible at all or impacting in any other way the visual appearance of the carpet surface. To the contrary as the binding of the surface layer is not impacted by any additional binder added to the back of the layer or obtained by laminating it to a layer surface to surface as is done in state-of-the art applications, the pile obtained is perceived softer and thicker by the user, compared to similar constructions with regular binding or glue layers used to bind the backing layer to the top layer.

The backing layer in the automotive trim part according to the invention comprises a fibrous needlefelt layer comprising fibers and a thermoplastic binder.

The binder in the backing layer is needed to bind the fibres within the layer, provide some stiffness to the layer as well as bind the fibers extending from the carpet surface layer into the backing layer. Preferably the binder in the backing layer is at least between 15 and 35% by weight of the layer, preferably between 20-30% by weight of the layer.

In a preferred solution the top layer may comprise a thermoplastic binder. The top layer is a structured needlefelt top layer and may maintain its construction in principle without the need of a binder. However, it was observed that a low amount of binder would enable a better cutting of the trim part shape and or cut outs, reducing fraying of the cut lines. Preferably the binder in the top layer is not more than 12% by weight of the layer, preferably not more than 10% by weight of the layer.

For both layers the same possible thermoplastic binders may be used. Preferably the binder in both layer is from the same source of material. Hence, the thermoplastic binder in at least one of the layers according to the invention, is least one of a polymer or copolymer of polyester, preferably a terephthalate-based polyester, preferably polyethylene terephthalate (PET) or polybutylene terephthalate (PBT), a polymer of polyolefin, preferably polypropylene (PP) or polyethylene (PE), or a polyamide (PA) polymer.

Preferably a binder in the initial form of staple fibers, preferably monocomponent or bicomponent staple fibers may be used, as this enables a good distribution during the forming of the initial fibrous web and the subsequent needling steps. A good distribution of the binder fibers is enhancing the locking of the fibers extending from the top layer into the backing layer.

Both layers comprise staple fibers, preferably at least one of polyester fibers, preferably terephthalate-based fibers, polyolefin-based fibers, polylactic acid fibers, polyamide fibers or natural fibers, like cotton, hemp, jute or similar, preferably the fibers used are a mixed of any of these fibers.

Preferably all layers consist of the same material, preferably at least both layers comprise polyester fibers, preferably terephthalate-based staple fibers, and at least the backing layer comprises terephthalate-based staple fibers comprising at least a copolymer of terephthalate-based polyester binder fiber. By using terephthalate-based materials throughout the trim part at least throughout both layers it is possible to recycle the thus formed part and or waste during production in an upcycling process, like re-spinning fibers.

The structured top layer and/or the needlefelt backing layer comprises staple fibers chosen from hollow fibers, hollow conjugate fibers with an intrinsic crimp, and/or solid fibers.

The fibers may be any of virgin, recycled or reclaimed polymer and/or any of virgin, recycled or reclaimed fiber source.

The carpet layer used in the trim part according to the invention consists of a fibrous structured needlefelt top layer and a needlefelt backing layer.

Preferably the structured needlefelt top layer has an area weight of between 200-700gms.

Preferably the needlefelt backing layer has an area weight of between 200-2000gsm.

A structured needlefelt top layer is defined as a needled felt treated with a structured needling as described in the background to obtain an aesthetic carpet structure, like a velour, dilour or ribbed surface. The surface may be mimicking a tufted carpet surface or maintain an own aesthetic appeal.

Standard preneedled felts or needlefelts are subjected to needling from both side in equal force and density, to obtain a regular felt layer with equal mechanical properties in all direction of the layer of the felt. Standard needlefelts are used for the backing layer and are used as pre-needlefelt for the structured needlefelt layer

Structured needlefelt layers are standard needlefelts subjected to an additional needling from one direction to obtain an asymmetric appearance in the direction of the thickness of the layer. The densified foot area helps to increase stiffness of the layer, while the less dense surface will enhance the perceived softness and carpet-like qualities by the passenger.

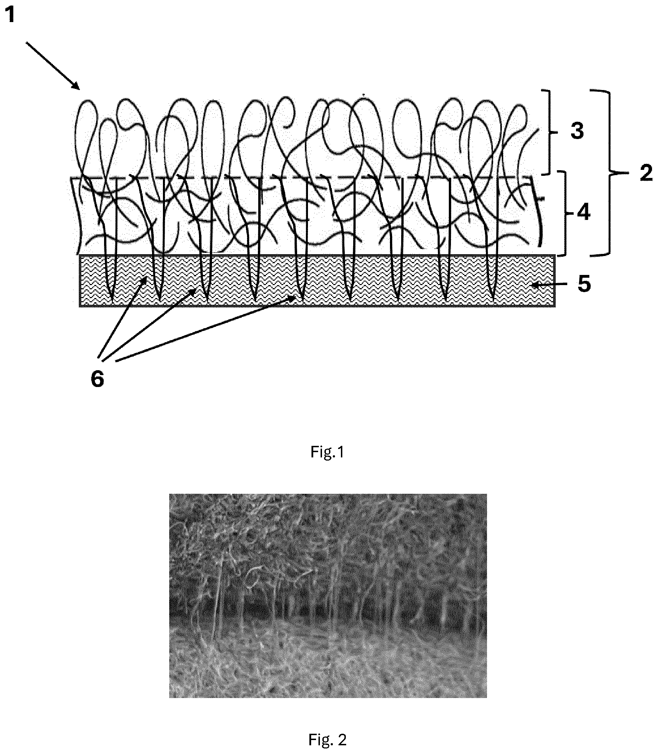

In a preferred structure the aesthetic surface is formed by loose loops 3 standing upright above a densified foot 4 (see figure 1). However, the surface may also be formed in a cord type structure, or a softer velour-like structure. This may be achieved with using structural needles as well as the appropriate back plates or bristle brushes during the needling step, to achieve the desired aesthetic surface.

For structured needlefelt, fork and crown needles may be used to push the fibre loops out of the preneedled material into a rotating brush apron to form the final structured needlefelt top layer.

For the automotive trim part according to the invention the structured needlefelt top layer may have a dilour, velour or ribbed surface structure with open or closed loops and a densified foot area. Open loops may be achieved by shearing the aesthetic surface.

Against common belief, it is possible to needle an already finalised structured needlefelt top layer to a needlefelt backing layer from the structured needlefelt side, without deteriorating the already formed aesthetic surface. By needling fibers from the top layer to the backing layer, with thin needles, that will not entangled the fibers during needling, it is possible to obtain an uninterrupted surface layer without defaults, while binding the surface layer to the backing layer by fibers extending from the top layer into the backing layer, where the thus extended fibers are locked during thermal moulding by the activated binder in the backing layer.

Surprisingly, it is not necessary to do a needle binding of both layers from both sides, hence there is no risk of contaminating the carpet surface with fibers from the backing layer. As the staple fibers of the top layer are in general colour matched with other component in the interior of the car, and the backing layer often uses lower quality or recycled fibers with different colours, it is unwanted that such fibers become visible at the surface of the carpet. With the trim part according to the invention, it is possible to combine any aesthetic surface with any backing layer without affecting the already structured carpet surface.

Automotive trim part comprising a carpet layer according to the invention, obtainable by the process of
- providing a top layer consisting of a structured needlefelt top layer;
- providing a needlefelt layer comprising fibers and a thermoplastic binder adjacent and touching the back surface of the carpet layer;
- needling both layers together such that only a small amount of fibers per needle are transported to the backing layer thereby extending between both layers, whereby the thus transported fibers are forming loops or fiber ends in the backing layer; and
- thermal moulding at least both layers together such that the thermoplastic binder of the backing layer is binding the extending fibers from the top layer in the backing layer without inducing an adhesive face to face binding between the layers.

Automotive trim part may further comprise additional layer or layers adjacent to the back surface of the backing layer, preferably at least one of a needlefelt layer, a scrim, a nonwoven layer, a carpet layer, a foam layer, a film layer, a thermoplastic elastomeric layer, an anti-slip backing layer, an adhesive layer, a recycled particle layer or a rubber layer.

An automotive trim part according to the invention with or without additional layers may be used as a trim part in the interior of a vehicle, truck or commercial vehicle for instance as a floormat, an automotive floor part, to cover the floor of the main passenger compartment, optionally extending under the seats, as covering of any side panels, or any surfaces in the front or the back dedicated for storage of personal belongings of the passengers of the car, or may be combined with stiff material to form a parcel shelf, headliner or back panel for a car seat.

The automotive trim part according to the invention with or without additional layers may be used to cover surfaces in trucks and/or commercial vehicles as well as electric driven passenger vehicles.

### Drawings

Figure 1 cross section of an automotive trim part according to the invention.
Figure 2 is showing a photo of the automotive trim part according to the invention
Figure 3 is showing a schema of a possible process to obtain the automotive trim part according to the invention.

Figure 1 is showing an automotive trim part 1 comprising a fibrous structured needlefelt top layer 2 and a needlefelt backing layer 5.

The fibrous structured needlefelt top layer 2 shown as an example comprises of a densified foot area 4 and a pile area 3 formed by closed loops extending substantially vertically above the densified foot.

During a final needling step both needlefelt layers were needled together such that fibers of the top layer 6 extend into the backing layer and are locked in place within the backing layer by the binder. While it is here shown as one looped fiber, the fibers extending may be in the form of loops or fiber ends and depending on the needle used it may be one fiber or more than one fiber moved to the backing layer to connect/bind both layers. Depending on the needle penetration of the needles, the fiber loops or ends may stay within the top layer or extend beyond the top layer into the backing layer. Preferably the needle penetration is at least such that the fiber ends and or loops extend over at least 70% of the thickness of the backing layer.

Figure 2 is showing a close-up photo of both layers slowly pulled apart after the needling but before moulding. The structured top layer 2 and the backing layer 3 were needled from the structured top layer to obtain a carpet construction according to the invention with a structured top layer and a backing layer. By pulling both layers apart, the bridging fibers between the two layer becomes visible. It can be seen that they are evenly distributed over the surface due to the spacing of the needles on the needle board and that the fibers can be pulled cleanly out of the barrier layer without breaking the fibers, showing that the fibers are held by the structure of the structural needlefelt, but not by the backing layer before moulding. Furthermore, it shows that no substantial entanglement of the fibers occurs during this final needle step. This is an advantage as this prevents any snagging or pulling on the carpet surface deteriorating the visual appearance.

The binding between the layers is predominantly due to the combination of the needling and the binder in the backing layer after thermal moulding or activation of the binder in the backing layer. Without the needling only a mediocre binding between the layers (low peeling force) after thermal moulding could be achieved, even if both layers comprised binder.

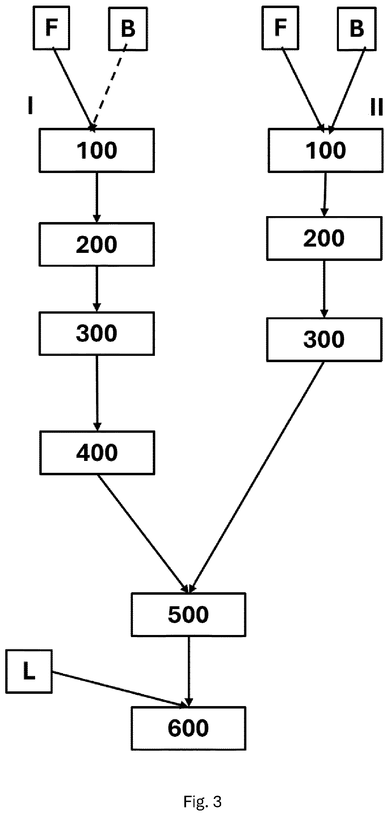

Figure 3 is showing the process steps schematically for producing the automotive trim part according to the invention. Process stream I. is directed to the fibrous structured needlefelt top layer and process stream II. is directed to the fibrous needlefelt backing layer.

In both processes initially the same steps occur, staple fibers (F) and optionally a binder B, preferably in the form of staple fibers, are blended 100 followed by web formation 200, for instance in the form of carding and cross lapping. The thus formed web is subjected to a needling in different steps, in a first needling step 300, the web is densified or preneedled to entangle the web, the web is needled preferably from both sides in equal amounts, either at the same time or subsequently alternating the direction. For the fibrous backing layer(stream II.) the thus formed needlefelt is ready to be used as the backing layer in the trim part according to the invention. For the fibrous structured needlefelt top layer (stream I.) the formed needlefelt layer is subjected to a structured needling 400 to obtain the desired aesthetic surface appearance as disclosed.

The structured needlefelt top layer and the needlefelt backing layer are placed adjacent and surface to surface on top of each other and are fed to a final needling loom 500 where the fibers of the top layer are needled to the backing layer, whereby some of the staple fibers of the top layer extend into the backing layer.

The thus formed bilayer construction consisting of the structured carpet needlefelt and the needlefelt backing layer are subjected to a thermal moulding process 600. At this step any additional layer or layers L may be added, whereby it is to be ensured that the needlefelt top layer is an outer layer with the aesthetic surface of the carpet facing outwards and uncovered by additional layers. During the thermal moulding process the binder of at least the backing layer melts and bind the fibers of the layer to neighbouring fibers, while in addition the extended fibers in the backing layer are locked in place by the thermoplastic binder of the backing layer.

Surprisingly the binding between the layers obtained by binding the needled down loops and/or ends into the backing layer is enough to pass the abrasion tests on a moulded carpet construction.

## Claims

1. Automotive trim part comprising a carpet layer consisting of a fibrous structured needlefelt top layer, and a backing layer comprising a fibrous needlefelt layer, whereby the fibrous needlefelt layer comprises fibers and a thermoplastic binder, **characterized in that** fibers from the needlefelt top layer extend into the backing layer and the extended fibers in the backing layer are locked in place by the thermoplastic binder of the backing layer.

2. Automotive trim part according to claim 1, whereby the top layer and the backing layer are in contact face-to-face without substantial adhesive bonding.

3. Automotive trim part according to claim 1 or claim 2, whereby the binder in the backing layer is at least between 15 and 35% by weight of the layer, preferably between 20-30% by weight of the layer.

4. Automotive trim part according to one of the preceding claims, whereby the top layer comprises a binder, preferably the binder in the top layer is not more than 12% by weight of the layer, preferably not more than 10%.

5. Automotive trim part according to one of the preceding claims whereby the top layer has an area weight of between 200-700gms.

6. Automotive trim part according to one of the preceding claims whereby the backing layer has an area weight of between 200-2000gsm.

7. Automotive trim part according to one of the preceding claims, whereby both layers comprise fibers, preferably at least one of polyester fibers, preferably terephthalate-based fibers, polyolefin-based fibers, polylactic acid fibers, polyamide fibers or natural fibers, like cotton, hemp, jute or similar, preferably the fibers used are a combination of any of these fibers.

8. Automotive trim part according to one of the preceding claims, whereby the thermoplastic binder is at least one of a polymer or copolymer of polyester, preferably a terephthalate-based polyester, preferably polyethylene terephthalate (PET) or polybutylene terephthalate (PBT), a polymer of polyolefin, preferably polypropylene (PP) or polyethylene (PE), or a polyamide (PA) polymer.

9. Automotive trim part according to one of the preceding claims, whereby the structured needlefelt top layer, has a dilour, velour or ribbed surface structure with open or closed loops, and a densified foot area.

10. Automotive trim part according to one of the preceding claims whereby the structured carpet layer and or the needlefelt backing layer comprises staple fibers chosen from hollow fibers, hollow conjugate fibers with an intrinsic crimp, and/or solid fibers.

11. Automotive trim part comprising a carpet layer according to one of the preceding claims, obtainable by the process of
- providing a top layer consisting of a structured needlefelt top layer;
- providing a needlefelt layer comprising fibers and a thermoplastic binder adjacent and touching the back surface of the carpet layer;
- needling both layers together such that only a small amount of fibers per needle are transported to the backing layer thereby extending between both layers, whereby the thus transported fibers are forming loops or fiber ends in the backing layer; and
- thermal moulding at least both layers together such that the thermoplastic binder of the backing layer is binding the extending fibers from the top layer in the backing layer without inducing an adhesive face to face binding between the layers.

12. Automotive trim part according to one of the preceding claims further comprising additional layer or layers adjacent to the back surface of the backing layer, preferably at least one of a needlefelt layer, a scrim, a nonwoven layer, a carpet layer, a foam layer, a film layer, a thermoplastic elastomeric layer, an anti-slip backing layer, an adhesive layer, a recycled particle layer or a rubber layer.

13. Use of the automotive trim part according to one of the preceding claims as an automotive floor part, a floor mat, a trunk part, a side trim part.
